# EUROPEAN PATENT APPLICATION

(11) **EP 2 053 851 A1**
(43) Date of publication of application: **29.04.2009**
(21) Application number: 08167553.0
(22) Date of filing: 24.10.2008
(51) Int. Cl.: H04N 5/46, A63B 23/00

(54) **Control device for receivers of information based on the propagation of the electromagnetic field, in particular for television sets, and an exercise machine comprising said device.**

(30) Priority: 24.10.2007 IT BO20070714
(71) Applicant: Technogym S.p.A., 47035 Gambettola (Forli' Cesena) (IT)
(72) Inventor: Viarani, Luigi, 47039 Savignano Sul Rubicone (Forlì Cesena) (IT); Barducci, Mirco, 47023 Cesena (Forlì Cesena) (IT)
(74) Representative: Lanzoni, Luciano

(57) **Abstract**

A control device for receivers of information based on the propagation of the electromagnetic field, particularly for television sets, comprises an input interface (20) for receiving analogue and digital television signals (100, 110); tuning means (30) for selecting an analogue channel (100a) or a digital channel (110a); a decoding circuit (40); an output interface (50) for connecting the device (1) to a television set (10) and sending a main signal (120) incorporating content to be displayed; a selection block (60) for selectively connecting to the output interface (50) an analogue output (31b, 32b) of the tuning means (30) or an output (40b) of the decoding circuit (40); a processing unit (70) connected to the tuning means (30) and for sending a first signal (130) representing a channel to be selected; the processing unit (70) being connected to the selection block (60) to send a second signal (140) and identify which signal must be sent to the output interface (50); the processing unit (70) is controlled by a controller device (80), so that it receives a control signal (150) and generates the first signal (130) and/or the second signal (140).

## Description

The present invention relates to a control device for receivers of information based on the propagation of the electromagnetic field, particularly for television sets, but more generally for systems for the transmission of information (for example even radio).

In particular with reference to television sets, said control device in general allows the display and selection of both analogue and digital channels.

Advantageously, in accordance with the invention, the control device may be applied to an exercise machine, equipped with a screen or an equivalent item of display equipment.

As is known, traditional television sets are set up to receive analogue signals (by means of an aerial and/or cable) and to display the content incorporated in them.

To change channel, a push-button control is normally used, which makes it possible either to pass through the various channels available in sequence, or to identify a specific channel to which the television set will be tuned.

To also display content incorporated in digital signals, the television set may be connected to an external device, normally called a "decoder", which is equipped with a digital tuner.

The decoder is controlled using a respective remote control, similar to that of a television set, but specifically dedicated to the digital device.

In this way, the user may enjoy the use of both analogue channels, thanks to the internal circuit structure of the television set and the relative remote control, and digital channels, thanks to the decoder and the second remote control.

In light of the above, it is clear how the simplicity of use of the system and convenience for the user are significantly compromised, since, in order to enjoy the use of all of the functions and channels available, use of a remote control is essential.

Moreover, the use of a remote control definitely makes operations for tuning to the various channels more complex and less immediate.

The disadvantages described above are particularly felt in the sector of exercise machines, such as "wellness" machines, in which the user can normally watch television while exercising.

In said context, it is clear that the need to simplify tuning to various channels as far as possible, irrespective of whether the channels are analogue or digital, is of primary importance.

The present invention therefore has for an aim to provide a control device for television sets which allows the user to tune the television set to analogue and digital channels in an extremely simple way.

Another aim of the invention is to provide a control device for television sets which allows the user to switch from analogue channels to digital channels (and vice versa) in a completely transparent way, using only the remote control generally used for tuning to analogue channels.

Yet another aim of the invention is to provide an exercise machine in which the user can enjoy the use of television content transmitted either by analogue channels, or by digital channels, switching from one type to the other in an extremely simple and intuitive way.

These and other aims are substantially achieved by a control device for receivers of information based on the propagation of the electromagnetic field, particularly for television sets, and by an exercise machine comprising said device, as described in the claims herein.

Further characteristics and advantages are more apparent from the detailed description of a preferred, non-limiting embodiment of the device and the exercise machine in accordance with the invention.

Said description is supplied below with reference to the accompanying drawings, which are also provided by way of example only without in any way limiting the scope of the invention, and in which:
- Figure 1a is a block diagram of a first embodiment of a device in accordance with the invention;
- Figure 1b is a block diagram of a second embodiment of a device in accordance with the invention;
- Figure 2 shows an exercise machine equipped with a device in accordance with the invention.

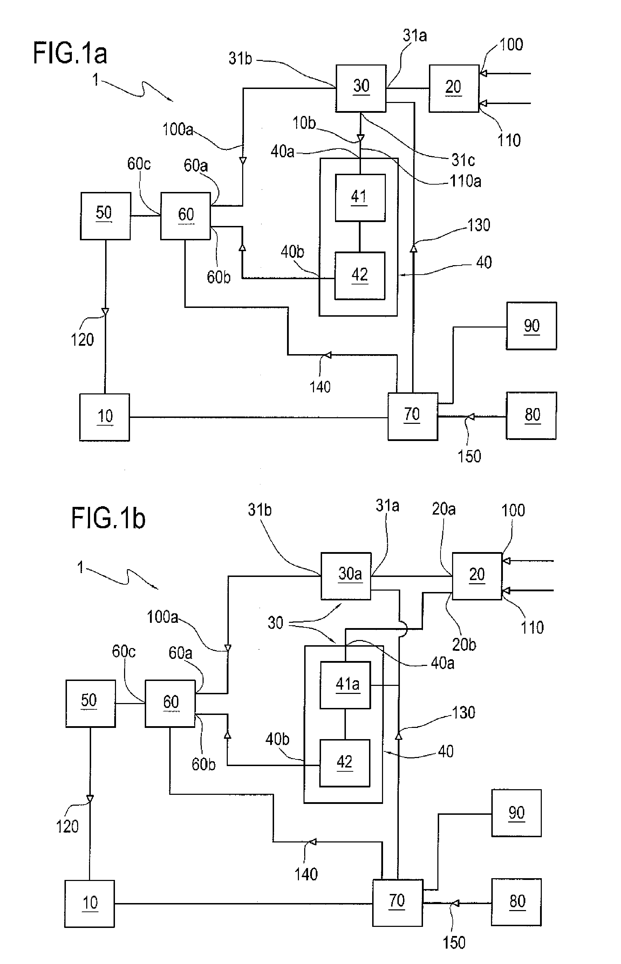

With reference to Figure 1a, the numeral 1 denotes as a whole a control device for receivers of information based on the propagation of the electromagnetic field, particularly for television sets in accordance with the present invention, in a first embodiment. In particular, this first embodiment is derived from a construction approach typical of television sets.

The control device 1 is set up to be connected to a television set 10 to allow the viewing of analogue and digital channels, and also to allow simple, rapid switching from one type to the other.

The device 1 comprises first an input interface 20 for receiving analogue televisions signals 100 and digital televisions signals 110.

The input interface 20 may allow connection to an aerial, for the reception of signals transmitted "over the air", and/or connection to a cable for the reception of television signals transmitted via cable.

It must be emphasised that the input interface 20 is set up to receive both analogue signals 100 and digital signals 110 (for example transmitted according to the DVB-T standard).

Connected downstream of the input interface 20 there are tuning means 30, designed to select an analogue channel 100a and/or a digital channel 110a which may be supplied at input to the television set 10 to display the content incorporated in it.

In this first embodiment, the tuning means 30 comprise an analogue tuner and a digital tuner, the tuners being equipped with respective inputs for receiving the signals supplied by the input interface 20, and with respective outputs to supply a selected analogue channel 100a or a selected digital channel 110a.

The tuning means 30 preferably have an input 31a connected to the input interface 20, for receiving the signals supplied by said interface.

The tuning means 30 also preferably have an analogue output 31b, for supplying a selected analogue channel 100a, and a digital output 31c, for supplying a selected digital channel 110a.

The device 1 also comprises a decoding circuit 40, for decoding digital signals and making them suitable for reception by a television set.

The decoding circuit 40 preferably has an input 40a, connected to the tuning means 30 for receiving the digital channel 110a selected by them. In particular, the decoding circuit input 40a may be connected to the digital output 31c of the tuning means 30.

The decoding circuit 40 may also have an output 40b, for supplying to the circuitry connected downstream the signals obtained from the processing performed by the decoding circuit 40.

In particular, the decoding circuit 40 may comprise a digital demodulator 41, for transforming the intermediate frequency digital signals received as input into signals which are in transport stream format, and a decoder 42 for transforming the transport stream format signals into a format that is acceptable for an analogue television set, such as the television set 10 to which the device 1 is connected.

The device 1 also comprises an output interface 50 for connecting the device 1 to the television set 10 and for sending to the television set a main signal 120 incorporating content to be displayed.

As is explained in more detail below, the main signal 120 may consist of an analogue channel 100a or a digital channel 110a selected by the tuning means 30.

The device 1 comprises a selection block 60 for selectively connecting to said output interface 50 the analogue output 31b of the tuning means 30, or the output 40b of the decoding circuit 40, thus defining the content of the main signal 120.

The selection block 60 preferably has a first input 60a, connected to the analogue output 31b of the tuning means 30, and a second input 60b connected to the output 40b of the decoding circuit 40.

The selection block 60 may also have an output 60c connected to the device 1 output interface 50.

In practice, if the channel to be displayed is an analogue channel 100a, the selection block 60 connects the analogue output 31b of the tuning means 30 to the device 1 output interface 50, so that the analogue channel 100a selected by the tuning means 30 is displayed.

Vice versa, if the channel to be displayed is a digital channel 110a, the selection block 60 connects the output 40b of the decoding circuit 40 to the device 1 output interface 50, so that the digital channel 110a selected by the tuning means 30 and processed by the decoding circuit 40 is displayed.

To manage the operation of the various elements described above, the device 1 is equipped with a processing unit 70.

The processing unit 70 is operatively connected to the tuning means 30 so that it can send the latter a first signal 130, representing a channel to be selected.

The processing unit 70 is also operatively connected to the selection block 60 so that it can send the latter a second signal 140 and identify, amongst the signals received as input by the selection block 60, which must be sent to the output interface 50.

The processing unit 70 is controlled by a controller device 80, so that it receives from the latter a control signal 150 and generates, depending on said control signal 150, the first signal 130 and/or the second signal 140.

As in the case of an exercise machine 2 described below, the controller device 80 may be directly integrated in the television set (touch screen).

The control signal 150 preferably identifies a channel which must be displayed. Said identification may occur by identifying the channel by means of a number unambiguously associated with it, or simply by pressing the keys corresponding to displaying the channel immediately before or immediately after the channel currently displayed.

In practice, when a user uses the touch screen controller device 80 to transmit to the device 1 a control signal 150 identifying the channel to be displayed, the processing unit 70 sends the first signal 130 to the tuning means 30, so that the tuning means 30 select the desired channel.

The processing unit 70 also sends the second signal 140 to the selection block 60, so that the analogue channel 100a or the digital channel 110a, depending on what was requested using the control signal 150, is transmitted to the output interface 50 (and, from there, to the television set 10 connected to the device 1).

Having recognised the type of channel (analogue or digital) requested using the control signal 150, the processing unit 70 controls the selection block 60 accordingly.

Advantageously, the processing unit 70 consists of a microcontroller, connected to the television set 10 by, for example, an RS232 type serial connection.

The device 1 preferably also comprises a memory register 90, in which analogue and digital channels selected using the tuning means 30 are archived in sequence.

More in particular, the processing unit 70 is set up to perform, in conjunction with said memory register 90 and with the tuning means 30, an initial learning operation, saving the channels which may then be retrieved by the user using the touch screen controller device 80.

The initial learning should preferably be carried out before the end user starts using the television set 10 in question, so that it can be used in an extremely simple way for the end user.

In more detail, the initial learning consists of a sequential scan of a preset spectrum of frequencies, comprising analogue and digital channels.

As the different channels are gradually identified by the tuning means 30, they are saved in the memory register 90 in a predetermined sequence. Said sequence may be the same sequence in which the channels were identified, or it may be a sequence set manually by the user.

In the preferred embodiment the device 1 also comprises a power supply interface, for receiving and adjusting an electric power supply arriving from the television set 10 to which the device 1 is connected.

In particular, the power supply interface may comprise a DC/DC conversion circuit, for adapting the power received to that effectively required by the device 1.

As indicated above, the device 1 may advantageously be connected to an exercise machine 2.

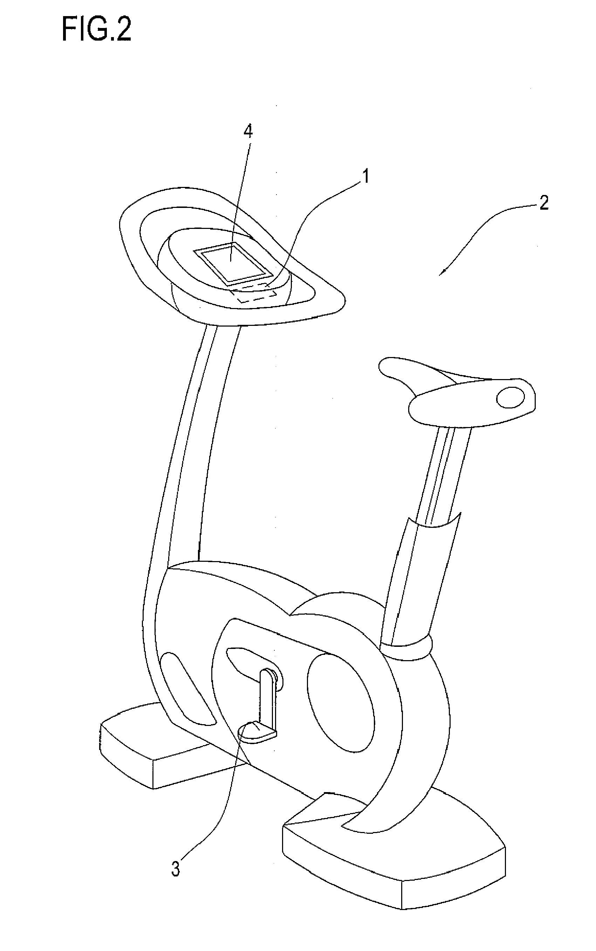

In the example application illustrated (Figure 2), the exercise machine is an exercise bicycle. However, it could be a rowing machine, a treadmill, or another type of exercise machine.

The exercise machine 2 comprises an element 3 for performing a physical exercise, which, in the example in Figure 2 comprises a pair of pedals connected to a flywheel (not illustrated).

Obviously, depending on the type of exercise machine considered, the element 3 may also be different to that indicated above by way of example.

The exercise machine 2 also comprises display means 4 which preferably comprise a video screen.

The display means 4 allow the user to enjoy video content while exercising with the element 3.

In this way, during a workout, the user can enjoy content supplied both by analogue channels and digital channels, and can also switch from one channel to another in a simple, rapid way, irrespective of whether the channels are analogue or digital.

In the example application in Figure 2, the display means 4 form the television set 10 to which the control device 1 is connected.

Figure 1b shows a second embodiment of the device disclosed. In said Figure the same reference characters as were used in Figure 1a are again used to label the same elements.

This second embodiment is substantially derived from a so called "set top box" type construction approach, well known to technicians in the field.

In this second embodiment the input interface 20 has two outputs, that is to say a first output 20a and a second output 20b.

There are also tuning means 30 comprising an analogue tuner 30a and a digital tuner connected to a digital demodulator, these latter items being labelled 41a as a whole. In more detail, the analogue tuner 30a has an analogue input 31a connected to the first output 20a of the input interface 20, and an analogue output 31b which transmits analogue channel 100a to the selection block 60.

In contrast, the digital tuner with digital demodulator 41a is integrated in the decoding circuit 40 described above, and is connected directly to the second output 20b of the input interface. As described, the digital tuner with digital demodulator 41a is connected to a decoder 42.

In this second embodiment, the processing unit 70 is operatively connected both to the analogue tuner 30a and to the digital tuner with digital demodulator 41a, sending them the first signal 130 which represents the channel to be selected.

## Claims

1. A control device for receivers of information based on the propagation of the electromagnetic field, in particular for television sets, **characterised in that** it comprises:
- an input interface (20) for receiving analogue and digital televisions signals (100, 110);
- tuning means (30) for selecting an analogue channel (100a) or a digital channel (110a);
- a decoding circuit (40) for decoding digital signals and making them suitable for reception by a television set;
- an output interface (50) for connecting the device (1) to a television set (10) and for sending to the television set a main signal (120) incorporating content to be displayed;
- a selection block (60) for selectively connecting to the output interface (50) an analogue output (31b, 32b) of the tuning means (30) or an output (40b) of the decoding circuit (40), thus defining the content of the main signal (120);
- a processing unit (70), operatively connected to the tuning means (30) for sending the latter a first signal (130) representing a channel to be selected;
the processing unit (70) being operatively connected to the selection block (60) for sending the latter a second signal (140) and identifying, amongst the signals received by the latter as input, which must be sent to the output interface (50);
the processing unit (70) being controlled by a controller device (80), so that it receives from the latter a control signal (150) and generates the first signal (130) and/or the second signal (140) depending on the control signal (150).

2. The device according to claim 1, **characterised in that** the tuning means (30) comprise:
- an analogue tuner, preferably incorporated in the television set (10);
- a digital tuner.

3. The device according to claim 1, **characterised in that** the tuning means (30) comprise:
- an analogue tuner (30a);
- a digital tuner connected to a digital demodulator (41a), both being integrated in the decoding circuit (40).

4. The device according to any of the foregoing claims, **characterised in that** it also comprises a memory register (90) in which analogue and digital channels selected using the tuning means (30) are archived in sequence.

5. The device according to claim 2, **characterised in that** the decoding circuit (40) comprises:
- a digital demodulator (41) for transforming the intermediate frequency digital signals received as input into signals which are in transport stream format;
- a decoder (42) for transforming the transport stream format signals into a format that is acceptable for an analogue television set.

6. The device according to claim 4, **characterised in that** the processing unit (70) is operatively connected to the tuning means (30) and the memory register (90) for scanning one after another a spectrum of frequencies comprising analogue and digital channels and for saving said channels in the memory register (90).

7. An exercise machine comprising:
- an element (3) for performing a physical exercise;
- display means (4) which allow a user to enjoy video content while exercising with the element (3); the machine being **characterised in that** it also comprises a control device (1) according to any of the foregoing claims, the device (1) being operatively connected to the display means (4) to allow the user to enjoy the use of analogue and digital channels.
